# EUROPEAN PATENT APPLICATION

(11) **EP 4 093 044 A1**
(43) Date of publication of application: **23.11.2022**
(21) Application number: 22169897.0
(22) Date of filing: 26.04.2022
(51) Int. Cl.: H04N 21/6332, H04L 67/125

(54) **ELECTRONIC DEVICE AND CONTROL METHOD THEREOF, AND REMOTE CONTROL SYSTEM**

(30) Priority: 17.05.2021 JP 2021083410
(71) Applicant: CANON KABUSHIKI KAISHA, Ohta-ku Tokyo 146-8501 (JP)
(72) Inventor: ICHIHARA, Erika, Ohta-ku, 146-8501 (JP); OTANI, Shota, Ohta-ku, 146-8501 (JP)
(74) Representative: TBK

(57) **Abstract**

An electronic device (100) that is able to be remotely controlled by an external device (200) is disclosed. The electronic device, upon receiving an instruction that influences a connection (300) with an external device, determines whether the received instruction is an instruction made through controls (105) included in the electronic device (100) or an instruction received from the external device (200) being connected through a connection (300). If it is determined that the received instruction is an instruction made through the controls (105), the electronic device executes processing according to the received instruction. If it is determined that the received instruction is an instruction received from the external device (200), the electronic device executes processing according to the received instruction to the extent that the connection (300) with the external device can be kept.

## Description

### BACKGROUND OF THE INVENTION

### Field of the Invention

The present invention relates to an electronic device and a control method thereof, and specifically relates to an electronic device that can be remotely controlled from an external device and a control method thereof. The present invention further relates to a remote control system.

### Description of the Related Art

An electronic device is known that can be remotely controlled through a user interface that is displayed on a screen of an external device (e.g., computing device such as a personal computer, a tablet terminal, or a smartphone) that is communicably connected thereto (Japanese Patent Laid-Open No. 2014-171138). The user interface to be displayed in the external device is provided based on at least one of data transmitted from the electronic device and data that a remote control application operating in the external device has.

Upon detecting an operation to the user interface, the external device transmits operation details to the electronic device. The electronic device executes operations according to the operation details received from the external device, and as a result, remote control of the electronic device from the external device can be realized.

For example, when the external device provides a user interface having the same function as the user interface provided by the electronic device or the like, an operation to disconnect the connection between the external device and the electronic device may be performed from the external device. If an operation to disconnect the connection between the external device and the electronic device is performed from the external device, the connection to the electronic device cannot be restored from the external device, and therefore remote control can no longer be performed.

The present invention has been made in view of the problems described above, and provides, in one aspect thereof, an electronic device that can prevent unintentional disconnection of a connection with an external device by remote control from the external device, and a control method thereof.

### SUMMARY OF THE INVENTION

The present invention in its first aspect provides an electronic device as specified in claims 1 to 6.

The present invention in its second aspect provides a remote control system as specified in claims 7 and 8.

The present invention in its third aspect provides a control method as specified in claims 9 to 14.

The present invention in its fourth aspect provides a program as specified in claim 15.

Further features of the present invention will become apparent from the following description of exemplary embodiments (with reference to the attached drawings).

### BRIEF DESCRIPTION OF THE DRAWINGS

FIG. 1 is a block diagram illustrating an exemplary functional configuration of a remote control system according to embodiments.
FIG. 2 is a flowchart regarding operations of an electronic device according to a first embodiment.
FIGS. 3A and 3B are diagrams illustrating exemplary screen displays in the embodiment.
FIG. 4 is a flowchart regarding operations of an electronic device according to a second embodiment.
FIG. 5 is a flowchart regarding operations of the electronic device according to the second embodiment.
FIGS. 6A and 6B are diagrams illustrating exemplary screen displays in the embodiment.
FIG. 7 is a flowchart regarding operations of the electronic device according to the second embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

Note that the present invention can be implemented in any electronic devices that accept remote control from an external device. These electronic devices include digital (video) cameras, computer devices (such as personal computers, tablet computers, media players, and PDAs), mobile phones, smartphones, game machines, robots, drones, and drive recorders. These are merely examples, and the present invention can be implemented in other devices. Also, the "external device" is a name of an electronic device that can perform remote control, for convenience' sake, and may be a device similar to the device that is remotely controlled, in actuality.

### First embodiment

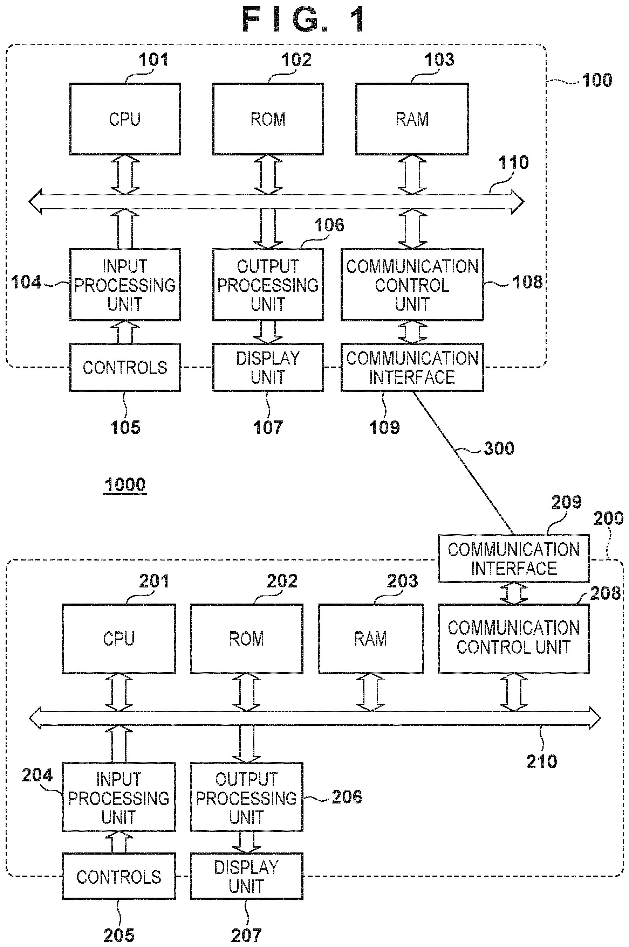

FIG. 1 is a block diagram illustrating an exemplary functional configuration of a remote control system 1000 including an electronic device 100 and an external device 200. Here, regarding the electronic device 100 and the external device 200, only the functional constituents relating to implementation of the present invention is described. In actuality, constituents unique to the devices that function as the electronic device 100 and the external device 200 are included. For example, when the electronic device 100 is a digital camera, a constituent regarding image capturing is included. Also, when the external device 200 is a smartphone, a constituent for performing communication through a mobile phone network is included.

The electronic device 100 includes an internal bus 110 for communicating data and control signals between functional blocks that are connected. Also, a CPU (Central Processing Unit) 101, a ROM (Read Only Memory) 102, a RAM (Random Access Memory) 103, an input processing unit 104, an output processing unit 106, and a communication control unit 108 are connected to the internal bus 110.

The ROM 102 is a nonvolatile memory, and at least a portion thereof may be electrically rewritable. Programs to be executed by the CPU 101, setting values of the electronic device 100, GUI data and the like are stored in the ROM 102.

The RAM 103 is a volatile memory, and is used by the CPU 101 to temporarily save a program, variables, work data, and the like.

The CPU 101 controls the units of the electronic device 100 by reading a program stored in the ROM 102 to the RAM 103 and executing the program, and realizes the functions of the electronic device 100.

The input processing unit 104 generates a control signal according to a user operation performed on controls 105, and supplies the control signal to the CPU 101. A plurality of input devices that are provided in or connected to the electronic device 100, and can be operated by a user are collectively referred to as the controls 105. Typical examples of the input devices that constitute the controls 105 includes a switch, a button, a lever, a dial, a keyboard, a mouse, a joystick, and a touch panel, but there is no limitation thereto. Also, a dedicated remote controller that is different from the external device 200 may also be included.

The CPU 101 executes an operation corresponding to the control signal from the input processing unit 104. Accordingly, the electronic device 100 performs operations according to user operations performed on the controls 105.

The output processing unit 106 outputs a display signal suitable for the display unit 107 based on display data such as a GUI (Graphical User Interface) and the like that is generated by the CPU 101 in accordance with a program.

Note that when a touch display is used as the display unit 107, the touch panel included in the touch display functions as an input device that constitutes the controls 105. As a result of using the touch display, software keys can be realized by combining the GUI display and the touch panel.

The communication control unit 108 performs communication with the external device 200 via the communication interface 109, based on the control by the CPU 101. The communication interface 109 includes interface circuits conforming to one or more wired and/or wireless communication standards. For example, typical examples of the wireless communication standard includes the IEEE 802.11 series, Bluetooth (registered trademark), and the like. Also, typical examples of the wired communication standard include IEEE 802.3, USB, HDMI (registered trademark), and the like.

The communication interface 109 establishes a wired and/or wireless communication connection 300 with a communication interface 209 included in the external device 200. The electronic device 100 and the external device 200 communicate to each other through the communication connection 300.

The external device 200 includes an internal bus 210 for communicating data and control signal between functional blocks that are connected. Also, functional blocks 201 to 209 included in the external device 200 are basically similarly configured to the functional blocks of the same names that are included in the electronic device 100, and therefore descriptions thereof will be omitted. When a user operates the controls 105 of the electronic device 100 and enables remote control from a menu screen, for example, the CPU 101 causes the communication control unit 108 to start operations to prepare a connection with an external device. The communication control unit 108 starts searching for the external device 200 through the communication interface 109.

Also, the user performs, in the external device 200, an operation to start an application to be used for remotely controlling the electronic device 100 on controls 205. The CPU 201 starts the application according to the operation performed on the controls 205. The application may be a dedicated application, or may also be a generic application such as a web browser application. In the case of a generic application, the user executes a command for starting communication with the electronic device 100 (e.g., inputting URL).

If the communication control unit 208 is not enabled, the CPU 201 enables the unit and causes the unit to start an operation for preparing communication with the electronic device 100. The communication control units 108 and 208 establish the communication connection 300 through a procedure conforming to the communication standard through the communication interfaces 109 and 209. Accordingly, the electronic device 100 (CPU 101) and the external device 200 (CPU 201) can perform communication.

Note that the communication connection 300 may be established through another procedure. For example, a configuration may be adopted in which the external device 200 is registered in the electronic device 100 as a connection partner, and the electronic device 100 is in a state of continuously waiting for connection of the external device. In this case, the user can establish the communication connection 300 with the electronic device 100 by merely starting an application in the external device 200.

When the external device 200 remotely controls the electronic device 100 using a generic application, the electronic device 100 has a function of transmitting data required to remotely control the electronic device 100 to the external device 200. For example, when the external device 200 remotely controls the electronic device 100 using a web browser application, the electronic device 100 has a web server function. Also, the electronic device 100 transmits data to be used in the web browser application to the web browser application, in response to a command transmitted from the web browser application.

In the following description, the communication between the electronic device 100 and the external device 200 is realized by the CPU 101 and the CPU 201 transmitting and receiving data through the communication control unit 108, the communication interfaces 109 and 209, and the communication control unit 209, unless otherwise stated.

### Operations of electronic device 100

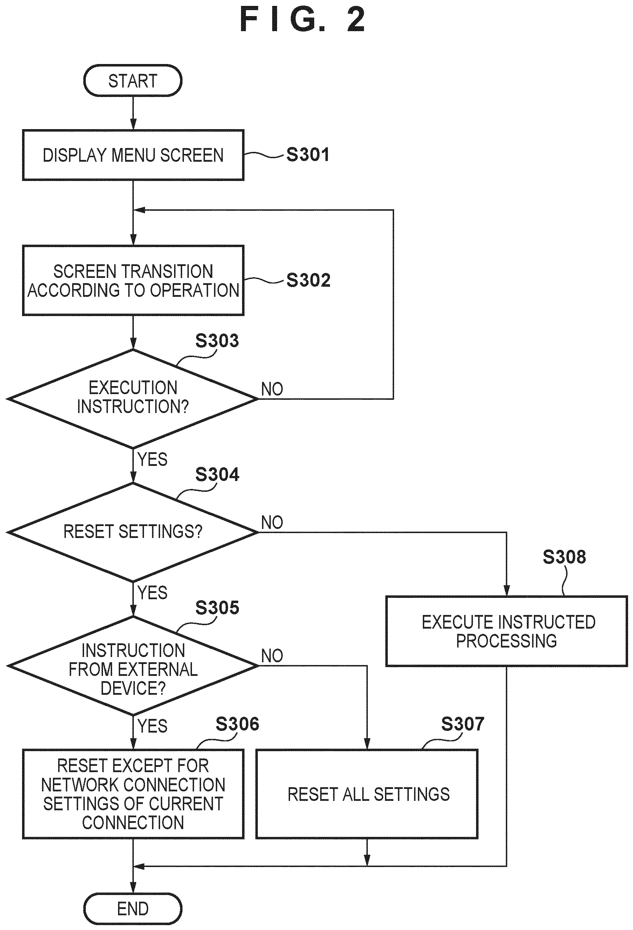

Next, the setting operation to be executed by the CPU 101 in a state in which the communication connection 300 with the external device 200 is established will be described using the flowchart in FIG. 2.

In step S301, the CPU 101 display a menu screen in the display unit 107 of the electronic device 100, in response to detection of a predetermined operation performed on the controls 105, for example. Alternatively, upon receiving a transmission request of menu screen data from the external device 200, the CPU 101 reads out the requested data from the ROM 102, and transmits the data to the external device 200 through the communication control unit 108 and the communication interface 109.

Note that if the communication with the electronic device 100 is not required to display the GUI screen in the external device 200, the CPU 101 may not participate in displaying the GUI screen in the external device 200. For example, if the remote control application operating in the external device 200 includes GUI screen data, and can independently provide the GUI screen, the CPU 101 may not participate in displaying the GUI screen in the external device 200.

In the present embodiment, it is assumed that there is no difference in the function between the menu screen to be displayed in the electronic device 100 and the menu screen to be displayed in the external device 200. That is, instruction details that are same as the instruction details that the user can give to the electronic device 100 through the controls 105 can be given to the electronic device 100 from the external device 200. For example, by making the menu screen to be displayed in the electronic device 100 be the same as the menu screen to be displayed in the external device 200, with respect to the appearance as well, the user can configure or change the settings of the electronic device 100 without paying attention to the difference of the device to be operated.

However, the menu screen to be displayed in the electronic device 100 may not be completely the same as the menu screen to be displayed in the external device 200. Note that, it is assumed that a menu screen including an item for resetting the settings of the electronic device 100 is displayed in the external device 200. Here, the resetting of the settings of the electronic device 100 is an example of the instruction for removing information required to establish or keep a connection between the electronic device 100 and the external device 200, or the instruction for causing an influence on the connection between the electronic device 100 and the external device 200.

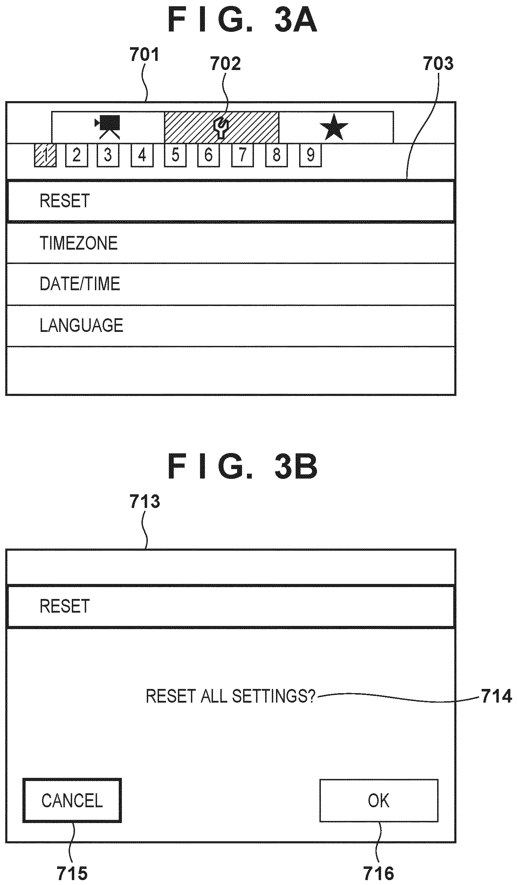

FIG. 3A shows an example of a menu screen 701 to be displayed in the display unit 107 of the electronic device 100 and the display unit 207 of the external device 200. Here, it is assumed that the display units 107 and 207 are touch displays, and by touching an item displayed in the menu screen 701, the touched item can be selected. When the display unit 107 is not a touch display, the menu screen can be operated through a known procedure such as a procedure in which an item to be selected is designated using direction keys of the controls 105, and the execution of the selected item is instructed by a determination button. When the display unit 207 is not a touch display, the menu screen can be similarly operated using the controls 205.

The menu screen 701 includes three tabs. The CPU 101 switches the display of the menu screen according to the selected tab. In FIG. 3A, a state is shown in which a tab 702 regarding the setting is selected, and the numbers 1 to 9 that are shown immediately below the tab indicate that the screen regarding the setting has 9 pages. When one number is selected, the CPU 101 displays a corresponding page. In FIG. 3A, the first page of the screen regarding the setting is displayed, and four items, namely, reset, time zone, date/time, and language, are included. When one of the four items is selected, the CPU 101 executes a command corresponding to the selected item, or displays a sub-screen. The sub-screen may be a screen for setting the details regarding the selected item, a screen for requesting the user to confirm execution, or the like.

In step S302, the CPU 101 causes the screen to transition in response to a transition operation with respect to the menu screen 701 through the controls 105 or a screen data command received from the external device 200. The transition operation mentioned here is an operation for executing only movement inside a layer or between layers of the menu that is hierarchically configured. For example, selection operations of the tab 702 in the menu screen 701 shown in FIG. 3A, and an item for displaying a sub-screen correspond to the transition operation. On the other hand, an operation for confirming execution of a predetermined operation (e.g., a selection operation of an item that does not have a sub-screen, an OK button, or an execution button) is an operation for instructing execution, and is not a transition operation.

In step S303, the CPU 101 determines whether or not an execution instruction has been received from the controls 105 or the external device 200. Then, if it is determined that the execution instruction has been received, the CPU 101 executes step S304, and if not, repeatedly executes step S302. The execution instruction is detection of an operation on the controls 105 for confirming execution of a predetermined operation, or reception of an execution command from the external device 200.

In step S304, the CPU 101 determines whether or not the execution instruction corresponds to an execution instruction of processing that includes removal of information required to keep the connection with the external device 200. Here, it is assumed that the processing including removal of information required to keep the connection with the external device 200 is processing for resetting the settings of the electronic device 100, but the processing may also be another processing.

If it is determined that an execution instruction to reset settings (reset instruction) has been received, the CPU 101 executes step S305, and if not, executes step S308.

In step S308, the CPU 101 ends the menu screen display, and executes the processing instructed by the received execution instruction.

In step S305, the CPU 101 determines whether the execution instruction to reset settings is a command received from the external device 200. If it is determined that the execution instruction to reset settings is a command received from the external device 200, the CPU 101 executes step S306, and if not, executes step S307.

The case where step S307 is executed is a case where the execution instruction to reset settings is an operation made on the controls 105. For example, if an item 703 in the menu screen 701 is an item that does not include a sub-screen and is for instructing execution of reset processing, the execution instruction to reset settings may be a selection operation of the item 703 by the controls 105. In this case, the CPU 101 resets all of the settings of the electronic device 100 that include information required to establish or keep the connection with the external device 200, and are stored in the ROM 102, for example.

On the other hand, in step S306, the CPU 101 resets the settings of the electronic device 100 to the extent that the connection with the external device 200 with which the communication connection 300 has been established (i.e., being connected) can be kept. Here, the case where the connection can be maintained includes a case where the connection is not disconnected, of course, and also a case where, even if the connection is disconnected, the connection can be established again.

Note that the configuration may be such that, before executing steps S306 and S307, a user is asked to confirm the execution such that canceling of the execution is possible (step S306 or S307 is executed only when confirmation is made). For example, before executing step S307, the CPU 101 displays a confirmation screen 713 as shown in FIG. 3B in the display unit 107. Then, if an operation on the cancel button 715 is detected, the CPU 101 executes step S301, and displays the menu screen 701 in the display unit 107, for example. On the other hand, if an operation on an OK button 716 is detected, the CPU 101 determines that the reset operation has been confirmed, and executes step S307.

Note that, before executing step S306, the CPU 101 displays the confirmation screen 713 in the display unit 207 of the external device 200. In this case, a message 714 such as "All settings are to be reset? (Communication with the device that is remotely controlled is maintained.)" is displayed in the confirmation screen 713, and notifies that the connection with the electronic device 100 is maintained even if the settings are reset. Accordingly, a user who is operating the external device 200 can understand that the remote control of the electronic device 100 can be continuously executed even if resetting is executed, and therefore user convenience is improved.

Then, if an operation on the cancel button 715 is detected, the CPU 101 executes step S301 and displays the menu screen 701 in the display unit 107, for example. On the other hand, if an operation on the OK button 716 is detected, the CPU 101 determines that the reset operation has been confirmed, and executes step S306.

Note that when the communication connection 300 with the external device 200 is disconnected by the execution of step S306, a configuration may also be adopted in which, after executing step S306, the CPU 101 automatically restores (re-establishes) the communication connection 300 with the external device 200.

As described above, in the present embodiment, while being connected with an external device, the processing details are changed according to whether the received execution instruction of processing including removal of information required to keep a connection with the external device, is made by operation performed on the own device or is received from the external device. Specifically, if the execution instruction is received from the external device, the processing is executed to the extent that the connection with the external device can be kept maintained, and if the execution instruction is made by operation performed on the own device, processing including removal of information required to keep a communication with the external device is executed.

Therefore, it can be avoided that the connection between the external device and an electronic device is unintentionally disconnected by remote control from an external device, and the connection cannot be restored.

### Second embodiment

Next, a second embodiment of the present invention will be described. The present embodiment can be implemented by the remote control system 1000 described in the first embodiment. Therefore, the present embodiment is also described using an electronic device 100 and an external device 200.

### Operations of electronic device 100

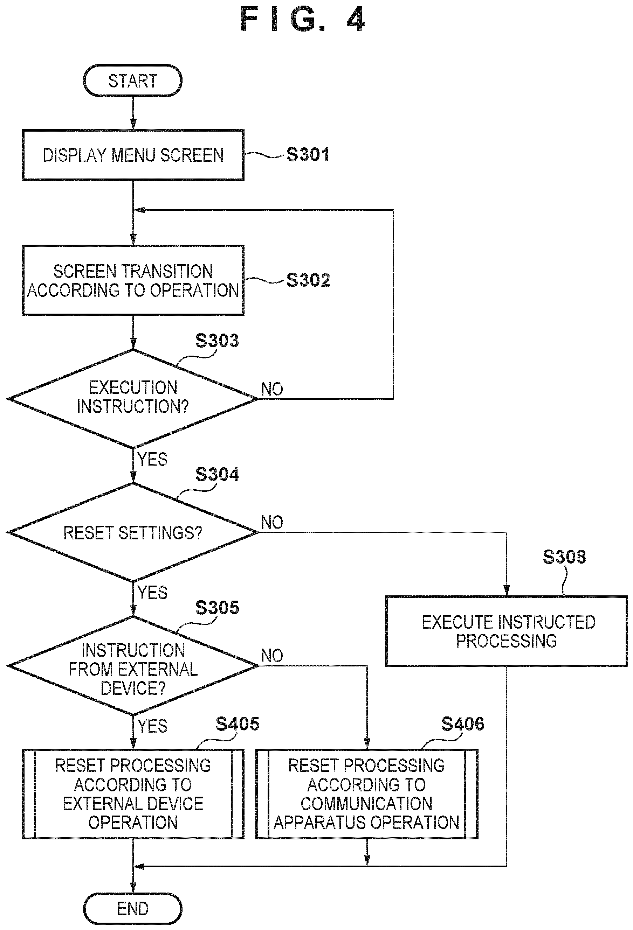

The setting operation of the present embodiment to be executed by a CPU 101 in a state in which a communication connection 300 with the external device 200 is established will be described using the flowchart in FIG. 4. In FIG. 4, the operations that are the same as those in first embodiment are given the same reference numerals as those in FIG. 2.

Steps S301 to S305 and step S308 are the same as those in the first embodiment, and the description thereof will be omitted.

In step S305, the CPU 101 determines whether the execution instruction to reset settings is a command received from the external device 200. If it is determined that the execution instruction to reset settings is a command received from the external device 200, the CPU 101 executes step S406, and if not, executes step S405.

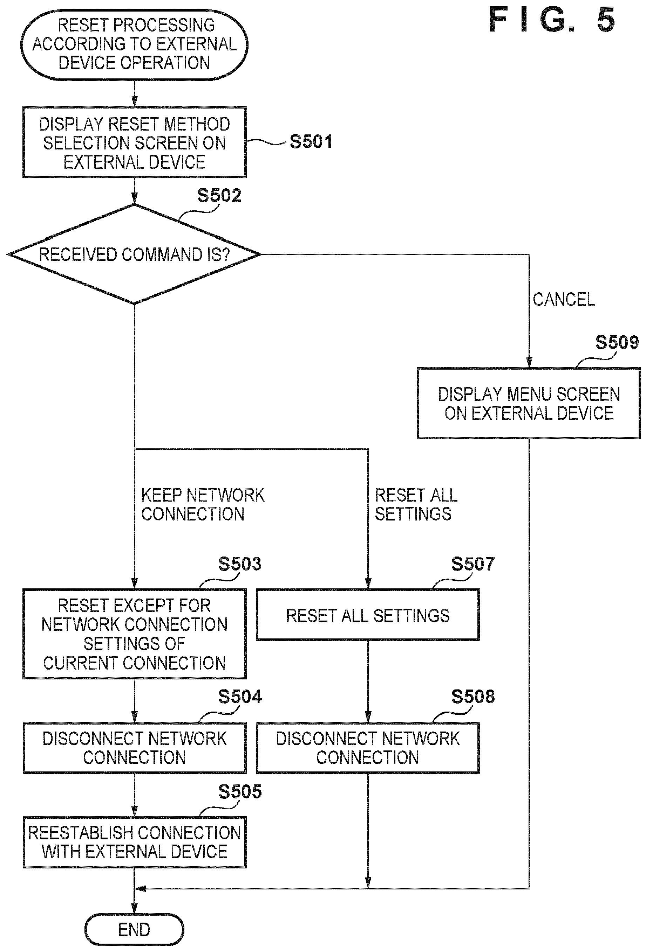

The processing to be executed by the CPU 101 in step S405 will be described using the flowchart shown in FIG. 5. Step S405 is executed when the CPU 101 receives a setting reset command from the external device 200.

In step S501, the CPU 101 transmits data for displaying a selection screen for selecting the reset method in a display unit 207 to the external device 200 through a communication control unit 108 and a communication interface 109. A CPU 201 displays the selection screen in the display unit 207 by using the received data in a generic application such as a web browser application.

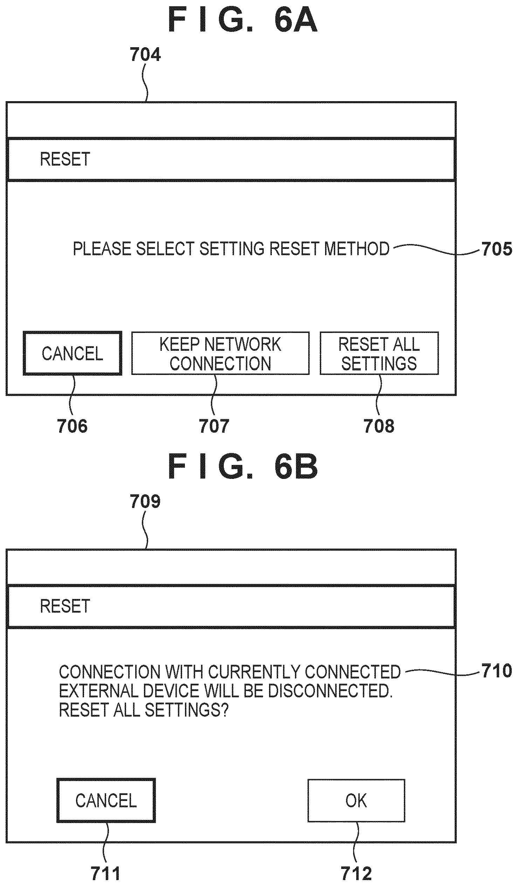

FIG. 6A is a diagram illustrating an example of the selection screen. A selection screen 704 is a screen for selecting a resetting method of settings. Here, it is assumed that a first method in which the settings are reset to the extent that the connection between the electronic device 100 and the external device 200 can be kept and a second method of resetting all the settings can be selected as the resetting method of settings. Note that when all the settings are reset, all of the information required to keep a connection between the electronic device 100 and the external device 200 are also reset (removed). Therefore, in order to reestablish a connection between the electronic device 100 and the external device 200, an operation for registering the information required to establish a connection between the electronic device 100 and the external device 200 should be executed in the electronic device 100.

The selection screen 704 includes a keep connection button 707 for instructing setting reset using the first method and an all reset button 708 for instructing setting reset using the second method. The selection screen 704 may further includes a cancel button 706 for canceling the setting reset.

A user who is operating the external device 200 performs an operation to select a button corresponding to the intended instruction from the selection screen 704. Upon detecting an operation made on one of the buttons 706 to 708 in the selection screen 704, the CPU 201 transmits a command corresponding to the operated button to the electronic device 100. Upon receiving the command from the external device 200, the CPU 101 executes step S502.

Note that, here, a case has been described where the data for providing the selection screen 704 in the external device 200 is transmitted from the electronic device 100 to the external device 200. However, when the external device 200 can independently provide the selection screen 704 (without needing reception of data from the electronic device 100) such as a case where a dedicated remote control application is used in the external device 200, the step S501 need not be executed.

This is because the execution instruction received in step S303 is a command (a command for instructing setting reset by the first method or the second method) based on an operation that has already been made on the selection screen 704. In this case, the CPU 101 skips step S501, and in step S502, determines the type of the command received from the external device 200 in step S303.

In step S502, the CPU 101 determines the type of the command received from the external device 200, and branches the processing according to the type of the command. That is, if it is determined that a command for instructing setting reset by the first method has been received, the CPU 101 executes step S503. If it is determined that a command for instructing setting reset by the second method has been received, the CPU 101 executes step S507. If it is determined that a command for instructing canceling has been received, the CPU 101 executes step S509. Note that when step S501 is skipped, and the type of the received command is determined in step S303, a command for instructing canceling is not received.

In step S503, the CPU 101 resets the settings of the electronic device 100 to the extent that the connection with the external device 200 with which the communication connection 300 is being established (being connected) can be kept, similarly to step S306 in the first embodiment.

In step S504, the CPU 101 may disconnect the communication connection 300 with the external device 200 as needed. Step S504 may not be executed. When step S504 is not executed, step S505 is not executed as well.

In step S505, the CPU 101 re-establishes the communication connection 300 with the external device 200 based on information that has not been reset.

In step S507, the CPU 101 resets all of the settings of the electronic device 100, similarly to step S307 in the first embodiment.

In step S508, as a result of resetting all of the settings of the electronic device 100, the CPU 101 disconnects the communication connection 300 with the external device 200. Note that when, as a result of resetting all of the settings, the communication connection 300 is automatically disconnected, step S508 need not be executed.

In step S509, the CPU 101 transmits data for displaying a menu screen 701 in the display unit 207 to the external device 200 through the communication control unit 108 and the communication interface 109. The CPU 201 displays the menu screen 701 in the display unit 207 by using the received data in a generic application such as a web browser application.

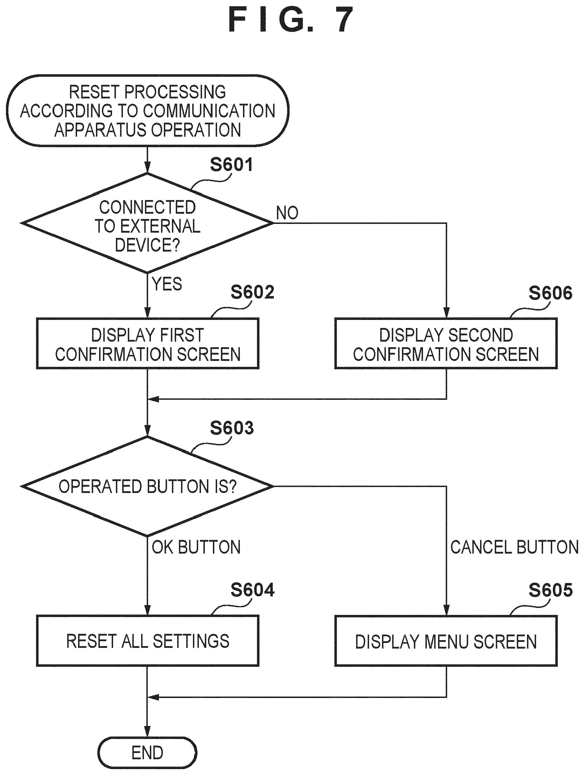

Next, the processing to be executed by the CPU 101 in step S406 in FIG. 4 will be described using the flowchart shown in FIG. 7. Step S406 is executed when the CPU 101 is instructed to execute setting reset through an operation performed on controls 105.

In step S601, the CPU 101 determines whether or not the electronic device 100 is connected with the external device 200 (the communication connection 300 is being established). If it is determined that the electronic device 100 is connected with the external device 200, the CPU 101 executes step S602, and if not, executes step S606.

In step S602, the CPU 101 displays a first confirmation screen for requesting a user to confirm whether the setting reset is to be executed in the display unit 107. FIG. 6B is an example of a first confirmation screen 709. The first confirmation screen 709 includes a message 710 for notifying the user of the fact that the connection with the external device 200 will be disconnected by resetting the settings. Also, the first confirmation screen 709 includes a cancel button 711 and an OK button 112. When an operation on a button in the first confirmation screen 709 is detected, the CPU 101 executes step S603.

In step S606, the CPU 101 displays a second confirmation screen for requesting the user to confirm whether the setting reset is to be executed in the display unit 107. The second confirmation screen may be the screen shown in FIG. 3B. Different from the first confirmation screen 709, the second confirmation screen 713 includes a message 714 for asking the user whether all of the settings are allowed to be reset. Because the connection with the external device 200 is not established, a message regarding the connection with the external device 200 is not included. When an operation on a button in the second confirmation screen 713 is detected, the CPU 101 executes step S603.

In step S603, the CPU 101 determines the type of the button that is detected to have been operated, and branches the processing according to the type of the button. That is, if it is determined that the OK button 712 or 716 has been operated, the CPU 101 executes step S604. Also, if it is determined that the cancel button has been operated, the CPU 101 executes step S605.

In step S604, the CPU 101 resets all of the settings of the electronic device 100, similarly to step S307 in the first embodiment.

In step S605, the CPU 101 displays the menu screen 701 in the display unit 107, and executes processing in step S302 and onward.

Note that, when the all reset button 708 is operated in the selection screen 704, the first confirmation screen 709 shown in FIG. 6B may be displayed in the display unit 207 of the external device 200. Accordingly, the user who is operating the external device 200 can be notified of the fact that the connection between the electronic device 100 and the external device 200 will be disconnected. Therefore, unintentional disconnection of the connection between the electronic device 100 and the external device 200 can be suppressed, the unintentional disconnection occurring in cases such as a case where a user does not understand the difference between the keep connection button 707 and the all reset button 708, and a case where a user erroneously operated the all reset button 708.

According to the present embodiment as well, similarly to the first embodiment, it can be avoided that the connection between an external device and an electronic device is unintentionally disconnected by remote control from the external device, and the connection cannot be restored.

Also, in the present embodiment, a user can select, when the settings of an electronic device is to be reset from an external device by remote control, whether the settings are to be reset to the extent that the connection with the electronic device can be kept, or all of the settings are to be reset. Therefore, it can be avoided that the connection between an external device and an electronic device is unintentionally disconnected, and the connection cannot be restored.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiments), and by a method performed by the computer of the system or apparatus by, for example, reading out and executing the computer executable instructions from the storage medium to perform the functions of one or more of the above-described embodiments) and/or controlling the one or more circuits to perform the functions of one or more of the above-described embodiments). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An electronic device (100) that is able to be remotely controlled by an external device (200) is disclosed. The electronic device, upon receiving an instruction that influences a connection (300) with an external device, determines whether the received instruction is an instruction made through controls (105) included in the electronic device (100) or an instruction received from the external device (200) being connected through a connection (300). If it is determined that the received instruction is an instruction made through the controls (105), the electronic device executes processing according to the received instruction. If it is determined that the received instruction is an instruction received from the external device (200), the electronic device executes processing according to the received instruction to the extent that the connection (300) with the external device can be kept.

## Claims

1. An electronic device (100) that is able to be remotely controlled by an external device (200), the electronic device (100) comprising:
determining means (101) for, upon receiving an instruction that influences a connection with an external device (200), determining whether the received instruction is an instruction made through controls (105) included in the electronic device (100) or an instruction received from the external device (200) being connected through a connection (300); and
control means (101) for, if it is determined that the received instruction is an instruction made through the controls (105), executing processing according to the received instruction and, if it is determined that the received instruction is an instruction received from the external device (200), executing processing according to the received instruction to the extent that the connection (300) with the external device (200) can be kept.

2. The electronic device (100) according to claim 1, wherein the extent that the connection (300) with the external device (200) can be kept is an extent that information required to keep the connection (300) with the external device (200) is not removed.

3. The electronic device (100) according to claim 1 or 2, wherein the control means, if the connection (300) with the external device (200) is disconnected as a result of having executed processing according to the received instruction to the extent that the connection (300) with the external device (200) can be kept, re-establishes a connection (300) with the external device.

4. The electronic device (100) according to any one of claims 1 to 3,
wherein the received instruction is an instruction to reset settings of the electronic device (100).

5. The electronic device (100) according to any one of claims 1 to 3,
wherein the control means (101)
if the instruction received from the external device (200) is an instruction to reset settings of the electronic device (100), determines the type of the instruction,
if it is determined that the instruction is to reset the settings by a first method, resets the settings to the extent that the connection (300) with the external device (200) can be kept, and
if it is determined that the instruction is to reset the settings by a second method, resets the settings of the electronic device (100) including information required to keep the connection (300) with the external device (200).

6. The electronic device (100) according to any one of claims 1 to 6, wherein the control means (101), if information required to keep the connection (300) with the external device (200) is to be removed as a result of executing the processing according to the received instruction, asks a user to confirm the execution.

7. A remote control system (1000) comprising:
the electronic device (100) according to any one of claims 1 to 6; and
an external device (200) that is communicably connected to the electronic device (100) via a connection (300) and is capable of remotely controlling the electronic device (100).

8. The remote control system (1000) according to claim 7, wherein the external device (200) is capable of giving same instructions as those a user can provide through the controls (105) included in the electronic device (100), to the electronic device (100) through the connection (300) with the external device (200).

9. A control method of an electronic device (100) that is able to be remotely controlled from an external device (200), the control method comprising:
determining (S305), upon receiving an instruction that influences connection with an external device, whether the received instruction is an instruction made through controls (105) included in the electronic device or an instruction received from the external device being connected through a connection;
executing (S307), if it is determined that the received instruction is an instruction made through the controls, processing according to the received instruction; and
executing (S306), if it is determined that the received instruction is an instruction received from the external device, processing according to the received instruction to the extent that the connection with the external device can be kept.

10. The control method according to claim 9, wherein the extent that the connection with the external device can be kept is an extent that information required to keep the connection with the external device is not removed.

11. The control method according to claim 9 or 10, the control method further comprising:
re-establishing (S505), if the connection with the external device is disconnected as a result of having executed processing according to the received instruction to the extent that the connection with the external device can be kept, a connection with the external device.

12. The control method according to any one of claims 9 to 11, wherein the received instruction is an instruction to reset settings of the electronic device.

13. The control method according to any one of claims 9 to 11, the control method further comprising:
determining (S501, S502), if the instruction received from the external device is an instruction to reset settings of the electronic device, the type of the instruction,
resetting (S503), if it is determined that the instruction is to reset the settings by a first method, the settings to the extent that the connection with the external device can be kept, and
resetting (S507), if it is determined that the instruction is to reset the settings by a second method, the settings of the electronic device including information required to keep the connection with the external device.

14. The control method according to any one of claims 9 to 13, the control method further comprising:
asking (S602, FIG. 6B), if information required to keep the connection with the external device is to be removed as a result of executing the processing according to the received instruction, a user to confirm the execution.

15. A program that when executed on a computer causes the computer to perform the method according to any one of claims 9 to 14.
